# EUROPÄISCHE PATENTSCHRIFT

(11) **EP 1 108 383 B1**
(45) Veröffentlichungstag und Bekanntmachung des Hinweises auf die Patenterteilung: **15.01.2003**
(21) Anmeldenummer: 00203861.0
(22) Anmeldetag: 03.11.2000
(51) Int. Cl.: A47J 27/08

(54) **Schnappverschluss für Dampfdruckkochtopf**
Closing mechanism of the snap type for a pressure-cooking vessel
Mécanisme de fermeture cliquetant pour des cuiseurs à vapeur

(30) Priorität: 14.12.1999 DE 19960137
(43) Veröffentlichungstag der Anmeldung: 20.06.2001
(73) Patentinhaber: Boehm, Hans-Georg, Dr. rer. nat., D-61476 Kronberg/Ts (DE)
(72) Erfinder: Boehm, Hans-Georg, Dr. rer. nat., D-61476 Kronberg/Ts (DE)

(56) Entgegenhaltungen:
- CH-A- 685 914
- DE-A- 19 544 717
- FR-A- 2 367 463
- US-A- 1 439 000

## Beschreibung

Bei Dampfdruckkochtöpfen mit geradem Topfrand und Zentralverschluß müssen wegen der geringen Belastbarkeit des Randes die Verschlußriegel den ganzen Rand des Deckels umfassen, wozu eine aufwendige Verschlußmechanik erforderlich ist. Dies erschwert die Betätigung des zentralen Drehgriffs durch das Verschieben oder Abklappen der zahlreichen Verschlußelemente und zwingt zu einem unnatürlich starken Herunterdrücken des Deckels gegen den bisher üblichen und kaum nachgebenden v-förmigen Dichtungsring, damit der Deckel beim Verschließen nicht auf dem oft leicht fettigem Topfrand mitrutscht. Diesen störenden Bedienungsnachteil und den komplizierten Aufbau der aus DE 3232907 A1 und CH 685 914 A5 (vgl. Oberbegriff des Anspruchs 1) bekannten Verschlußsysteme gilt es zu vermeiden und eine Gewichtsersparnis durch einen einfacheren mechanischen Aufbau zu erzielen. Siehe hierzu auch die sonstigen Patentdokumente zum Thema Zentralverschluß: DE 4420144 C1, DE 4432083 A1, EP 0 671 140 A1, DE 4017067 A1, DE 195 44 717 A, FR 2 367 463 A und US 1 439 000 A.

Diese Aufgabe wird durch einen Deckel mit Schnappverschluß in Gestalt einer über den ganzen Deckel gespannten Federklammer gemäß Anspruch 1 gelöst. Weitere besondere Merkmale sind in die Unteransprüche 2-4 aufgenommen .

Eine wesentliche Verbesserung zu den bisher bekannten Systemen mit verschiebbaren (DE 3232907 A1) oder am äußeren Rand eines inneren Deckels abklappbaren, kleinen Verschlußelementen, die zudem noch durch einen das Gewicht verdoppelnden Oberdeckel betätigt werden müssen (CH 685 914 A5), stellt ein Schnappverschluß dar, der einfach nur aus einer Federklammer (1) mit kombinierten äußeren Klammerenden besteht, die kraftschlüssig wie eine Bügelfeder über den ganzen Deckel gespannt ist.

Da die Federklammer nur im Zentrum der oberen Deckelmulde befestigt ist, schnappen ihre äußeren hakenförmigen Enden - in Verschlußstellung durch ihre schwachen inneren Federenden (14) leicht vorgespannt und angeklappt - beim Herunterdrücken des Deckels automatisch unter den Topfrand (10). Ein einhändiges Verschließen des Deckels, also nur durch sein Herunterdrücken mit einem zentralen Drehgriff (2), ist mit weniger Kraft kaum vorstellbar.

Die äußeren Enden der Federklammer verbleiben in Öffnungsstellung, also vom Topfrand abgeklappt, wenn die inneren, starken Enden (13) der Federklammer durch den Drehgriff gegen die schwächere Rückstellkraft der Enden (14) in die obere Deckelmulde heruntergedrückt und dieser dann unter einem Bügelgriff (3) gedreht und somit arretiert wurde. Der Drehgriff besitzt dazu auf seiner Oberseite eine Aussparung in die der Bügelgriff in Verschußstellung eintaucht, unter den Bügelgriff abgesenkt und verdreht, aber in dieser tieferen Position fixiert bleibt.

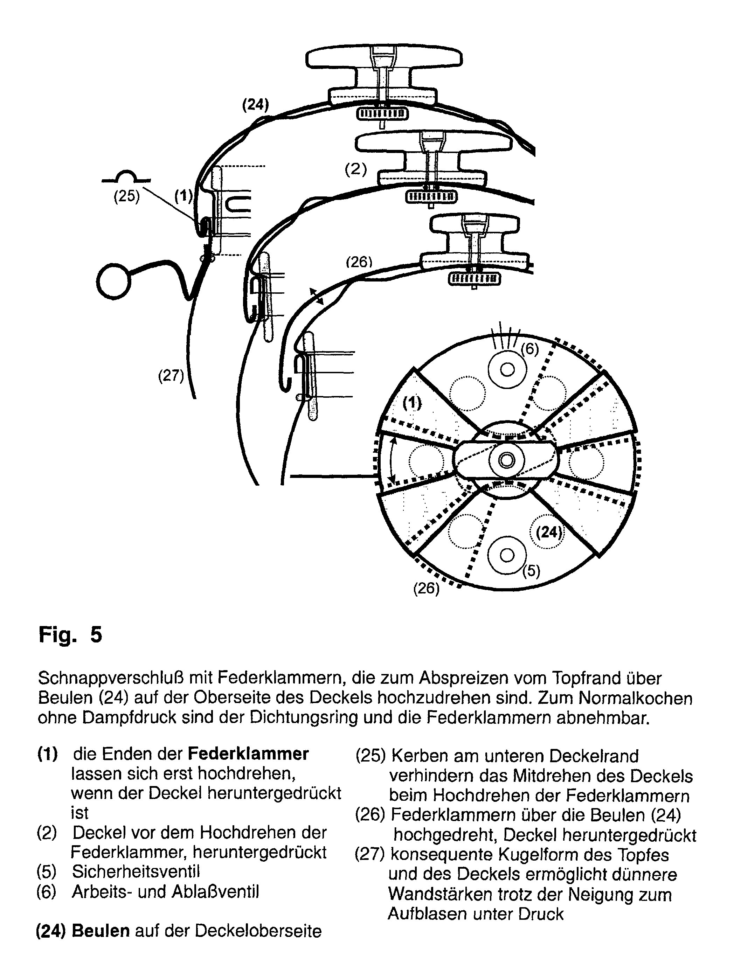

Noch einfacher bleiben bei einem kugelförmigen Deckel die Enden der Federklammer nach dem Öffnen vom Topfrand abgespreizt, wenn deren Enden mit dem Drehgriff über **Beulen** (24) oder Vorsprünge auf der Deckeloberseite hochgedreht wurden (Fig. 5).

Das Herunterdrücken des Deckels zum Öffnen oder Schließen erfordert zusätzlich noch weniger Kraftanstrengung als üblich, weil er einen Dichtungsring mit **senkrechten Lippen** (7) besitzt und somit ohne spürbaren Widerstand in den Topf abzusenken ist.

Zur Nulldrucksicherung, also zum vollständigen Abbau des restlichen Dampfdrucks, noch bevor der Deckel gänzlich heruntergedrückt und abgenommen werden kann, lüpfen die **Bolzen** (20) am inneren oberen Topfrand die untere Lippe (7) des Dichtungsrings zur Belüftung. Erst dann können die äußeren Enden der Federklammer automatisch vom Topfrand abspreizen.

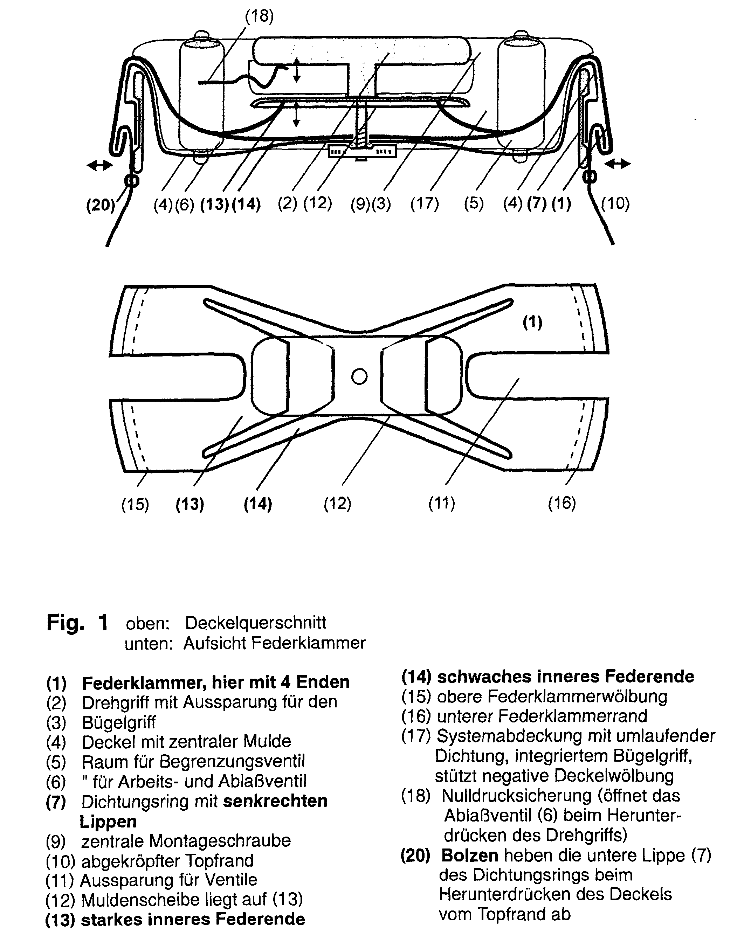

Fig. 1: Der Deckel besitzt hier in seinem Zentrum eine nach innen gerichtete Wölbung, über die die Federklammer gespannt ist. Drückt man den zentralen Drehgriff (2) gegen die starken inneren Federenden (13) nach unten, werden die äußeren hakenförmigen Enden der Federklammer vom Topfrand (10) abgespreizt. Die schwächeren inneren Enden (14) sorgen dabei für spielfreie Beweglichkeit. Durch den abgekröpften Topfrand (10) ohne die sonst üblichen, schwächenden Bajonettsegmente ist eine beachtliche Reduzierung des gesamten Topfgewichtes erzielt, vorteilhaft fürs Handling, denn jetzt ist erstmalig mit einem bauchigen Topf ohne größere Verformungen auch mit geringer Wandstärke der geforderte Berstdruck und eine kürzere Aufheizzeit erreicht. Zum Einschnappen der hakenförmigen Enden der Federklammer unter den Topfrand muß der Bügelgriff (3) nicht einmal unbedingt zu den Topfgriffen ausgerichtet werden, weil sie vorteilhaft in jeder beliebigen Stellung greifen.

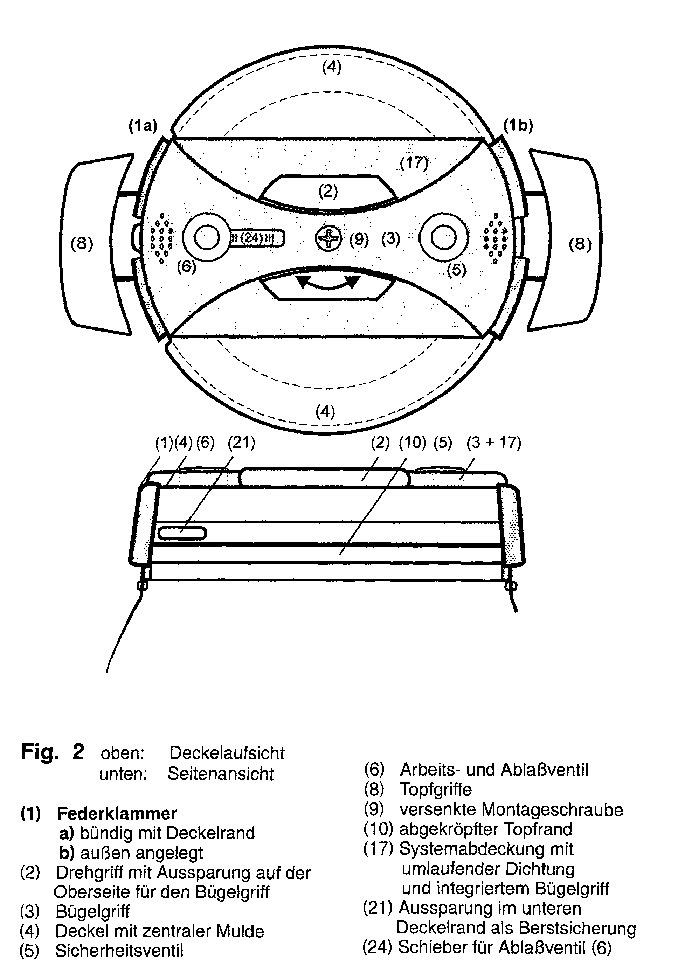

Fig. 2: Die Aufsicht eines Deckels zeigt die am Topfrand leicht überstehenden Enden der Federklammer, die durch Herunterdrücken des zentralen Drehgriff (2) auf die inneren Federenden (13) vom Topfrand abgespreizt werden. Verdreht man den Drehgriff mit einer Aussparung auf seiner Oberseite, in die der Bügelgriff in Verschlußstellung eintaucht, in seiner abgesenkten Position unter dem Bügelgriff, dann bleiben die Enden der Federklammer vom Topfrand abgespreizt und der Deckel kann vom Topf abgenommen werden.

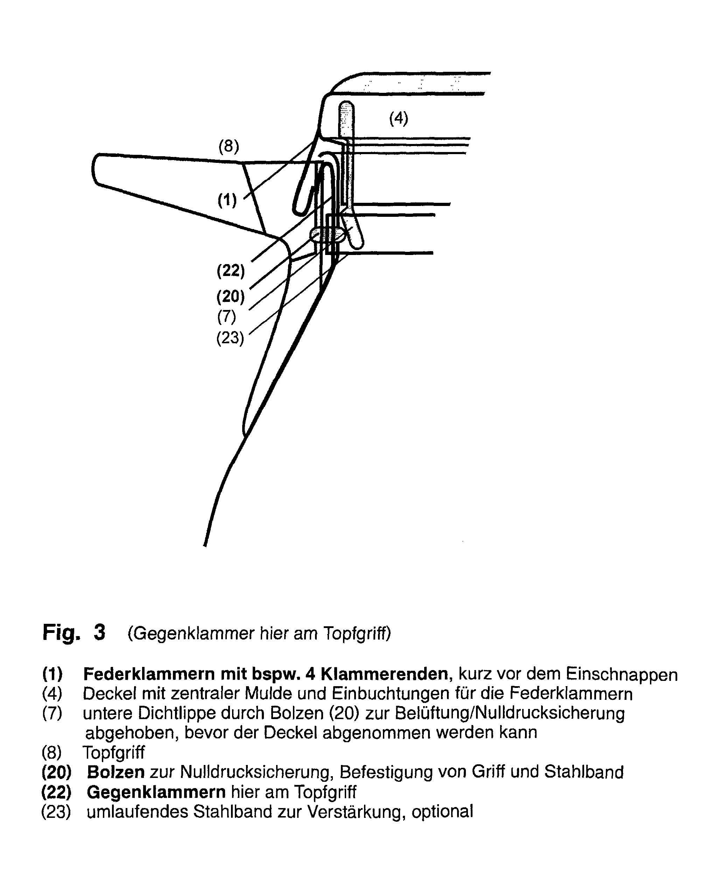

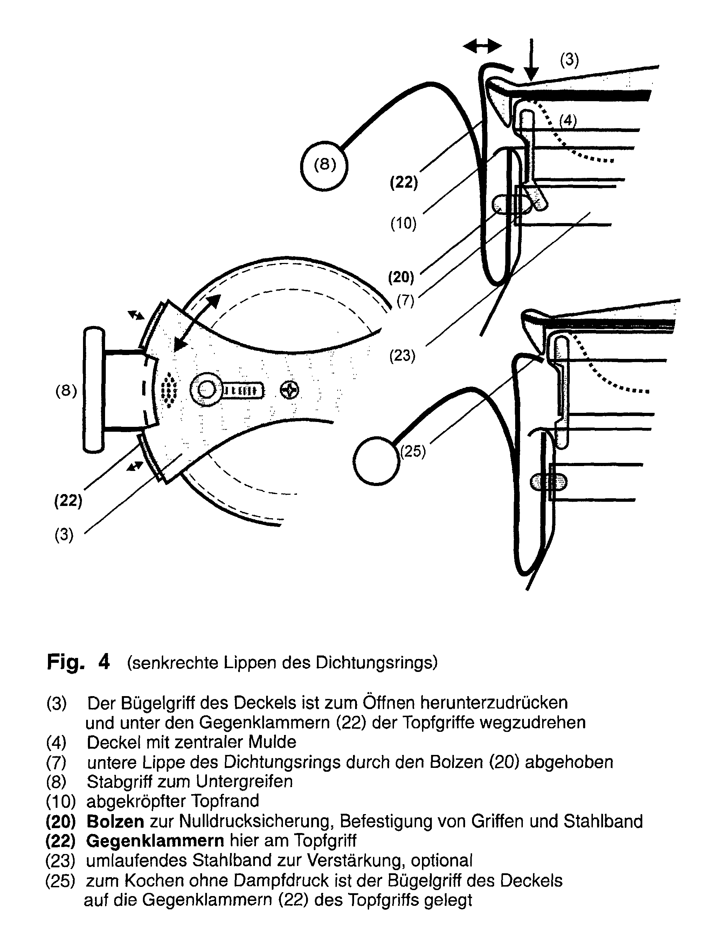

Fig. 3 und Fig.4: zeigen im Querschnitt die abgespreizten Enden der Federklammer von einer Gegenklammer am Topfgriff. Die Bolzen (20) lüpfen die untere Lippe des Dichtungsrings (7) zur Belüftung und Nulldrucksicherung noch bevor der Deckel vom Topf abgenommen werden kann.

Die dünnen, symmetrischen und senkrechten Lippen des Dichtungsrings zentrieren automatisch den Deckel beim Aufsetzen, stellen eine kostengünstige Herstellung sicher und vermeiden ein falsches Einsetzen. Der Dichtungsring dient auf grund seiner senkrechten Lippen auch zur sanften, geräuschlosen Ablage des Deckels, weil er etwas unter ihm hervorragt.

Fig. 5: Bei einem Deckel mit angenäherter Kugelform werden die Enden der Federklammer zum Abspreizen der äußeren hakenförmigen Enden über Beulen (24) oder Vorsprünge auf der Deckeloberseite hochgestellt und bleiben gleichzeitig arretiert. Der Dichtungsring und die Federklammer können hier zum Normalkochen ohne Druck abgenommen werden.

## Patentansprüche

1. Dampfdruckkochtöpfe mit glattem Topfrand, einem Deckel mit Verschluß, mechanik zentralem Drehgriff zur Betätigung der Verschlußmechanik mit vom Topfrand abklappbaren Klammern und einem Dichtungsring sind **dadurch gekennzeichnet, daß** eine **Federklammer** (1) über den ganzen Deckel kraftschlüssig gespannt ist und deren hakenförmige Enden beim Herunterdrücken des Deckels zum Verschließen automatisch unter den Topfrand (10) oder unter Gegenklammern am Topfgriff (22 Fig. 3 oder Fig. 4) schnappen und zum Öffnen durch Herunterdrücken des **zentralen Drehgriffs** (2) auf ihre inneren starken Federenden (13) vom Topfrand abspreizen, ihr Dichtungsring symmetrische **senkrecht stehenden Lippen** (7) besitzt und nach innen ragende **Bolzen** (20) am oberen Topfrand dessen untere Dichtlippe noch vor dem Abspreizen der Klammerenden lüpfen.

2. Dampfdruckkochtöpfe gemäß Anspruch 1 sind zusätzlich **dadurch gekennzeichnet, daß** die Federklammer aus einem System von bspw. vier kombinierten äußeren hakenförmigen Enden besteht und jeweils zum Deckelzentrum gerichtete **innere Enden unterschiedlicher Federkraft** auf Grund ihrer verschiedenen Stegbreite besitzt (13, 14 Fig. 1).

3. Dampfdruckkochtöpfe gemäß Anspruch 1 sind zusätzlich **dadurch gekennzeichnet, daß** die Enden der Federklammer zum Abspreizen vom Topfrand über **Beulen** (24 Fig. 5) oder Vorsprünge auf der Deckeloberseite hochzudrehen sind.

4. Dampfdruckkochtöpfe gemäß Anspruch 1 sind zusätzlich **dadurch gekennzeichnet, daß** der Drehgriff auf seiner Oberseite eine **Aussparung** besitzt in die der Bügelgriff in Verschlußstellung eintaucht, unter den Bügelgriff abgesenkt und verdreht aber diese tiefere Position beibehält und so die äußeren Enden der Federklammer abgespreizt bleiben (Fig. 2).

## Claims

1. Steam pressure cooking pots with even brim, a lid with seal mechanics, a central turning knop handle, brackets spreading off the pot brim and a sealing ring are **characterized by** a feather spring (1) which is tensed friction-lockedly over the whole lid and locks the brackets automatically under the pot brim (10) or under counter-brackets of the pot handles (22 Fig. 3 and Fig. 4) when pressing the lid down or spread them off to open the lid, when pressing down the central knop handle (2) on its inner strong spring footbridge (13) and are **characterized by** a sealing ring having symmetrical and vertically lips (7) of which its lower lip is lifted by rising bolts (20) on the inner side of the upper pot brim before the brackets on the feather spring ends are spread off.

2. Steam pressure cooking pots according to claim 1 are **characterized in** addition by feather springs consisting for example of a system of four combined bracket ends and inner ends of different spring force due to their different footbridge width, directed to the lid center (13, 14 of Fig. 1).

3. Steam pressure cooking pots according to claim 1 are **characterized in** addition by bracket ends being spread off from the pot brim by turning them higher over bumps or projections on the lid top side (24 Fig. 5).

4. Steam pressure cooking pots according to claim 1 are **characterized in** addition by a central turning knob handle which has a cut-out on its top providing the hanger handle to dive in in the seal position, but spreads off the brackets when it is lowered under the hanger handle and turned slightly to fix the knob in this deeper position (Fig. 2).

## Revendications

1. Autocuiseurs avec un bord lisse, un couvercle avec une mécanique de fermeture, une poignée centrale pour ouvrir le couvercle, avec crochets écarquillants au bord du couvercle et avec une lessiveuse sont charactérisés par un ressort plat (1), qui est tendu conclusivement sur tout le couvercle et ferme automatiquement ses crochets sous le bord du pot (10) ou sous contre-crochets aux poignées extérieures du pot (22 Fig. 3 ou Fig. 4) en baissant le couvercle et qui les écarte du bord du pot à l'ouvrir en pressant la poignée centrale (2) sur les fins intérieures fortes du ressort plat (13) et sont charactérisés par une lessiveuse avec lèvres symétriques et verticales (7) dont la lèvre inférieure est levée par boulons interieurs (20) au bord supérieur du pot avant les crochets du ressort plat s'écartent.

2. Autocuiseurs selon la revendication 1 sont en plus charactérisés par exemple par un ressort plat d'un système de quatre crochets combinés, qui montrent des fins de ressort intérieures d'une force différente en raison de la différente largeur de leurs bras (13, 14 Fig. 1).

3. Autocuiseurs selon la revendication 1 sont en plus charactérisés par des crochets haut-tournés sur bosses (24 Fig. 5) ou avances à la surface du couvercle.

4. Autocuiseurs selon la revendication 1 sont en plus charactérisés par une poignée centrale, qui possède sur son côté supérieur une coche dans laquelle la poignée d'étrier plonge en position de fermeture, mais conserve cette position plus profonde pressée et tournée sous la poignée d'étrier et ainsi les crochets du ressort plat restent écartés (Fig. 2).
